# EUROPÄISCHE PATENTANMELDUNG

(11) **EP 0 768 145 A2**
(43) Veröffentlichungstag der Anmeldung: **16.04.1997**
(21) Anmeldenummer: 96114859.0
(22) Anmeldetag: 17.09.1996
(51) Int. Cl.: B23Q 11/10

(54) **Verfahren zur Behandlung von Werkstücken in einer Transferstrasse sowie Transferstrasse zur Durchführung eines solchen Verfahrens**

(30) Priorität: 10.10.1995 DE 19537719
(71) Anmelder: Dürr Ecoclean GmbH, 70794 Filderstadt (DE)
(72) Erfinder: Alvarez-Vega, Antonio, 52224 Stolberg (DE); Meyer, Otfried, 52385 Nideggen (DE); Wüller, Karl-Heinz, 52152 Simmerath (DE)
(74) Vertreter: Hoeger, Stellrecht & Partner

(57) **Zusammenfassung**

Verfahren zur Behandlung von Werkstücken (84) in einer mehrere miteinander durch Werkstücktransportmittel (32) verkettete Behandlungseinheiten (10,20) umfassenden Transferstraße, bei dem die Werkstücke mindestens in einer vor der letzten Behandlungseinheit der Transferstraße befindlichen, eine Bearbeitungseinheit bildenden Behandlungseinheit einer spanabhebenden Bearbeitung unterzogen und dabei mit einer Bearbeitungsflüssigkeit beaufschlagt werden, welche im Kreislauf (68,70) geführt und dabei aufbereitet (78) wird, und bei dem die Werkstücke in der Transferstraße (80) und nach der spanabhebenden Bearbeitung mit einer Flüssigkeit gereinigt werden; um mit einem möglichst geringen apparativen Aufwand auszukommen, werden die bearbeiteten Werkstücke mit der Bearbeitungsflüssigkeit gereinigt, d. h. die letztere dient einem doppelten Zweck, nämlich einmal als Hilfsmittel bei der spanabhebenden Werkstückbearbeitung, und zum anderen als Reinigungsflüssigkeit.

## Beschreibung

Die Erfindung betrifft ein Verfahren zur Behandlung von Werkstücken in einer mehrere miteinander durch Werkstücktransportmittel verkettete Behandlungseinheiten umfassenden Transferstraße, bei dem die Werkstücke zumindest in einer vor der letzten Behandlungseinheit der Transferstraße befindlichen, eine Bearbeitungseinheit bildenden Behandlungseinheit einer spanabhebenden Bearbeitung unterzogen und dabei mit einer Bearbeitungsflüssigkeit beaufschlagt werden, welche im Kreislauf geführt und dabei einer Aufbereitung unterzogen wird, und bei dem die Werkstücke in der Transferstraße und nach der spanabhebenden Bearbeitung mit einer Flüssigkeit gereinigt werden.

Die Erfindung betrifft ferner eine Transferstraße mit mehreren Behandlungseinheiten, die durch Werkstücktransportmittel miteinander verkettet sind und von denen wenigstens eine vor der letzten Behandlungseinheit der Transferstraße befindliche, eine Bearbeitungseinheit bildenden Behandlungseinheit für eine unter Einsatz einer Bearbeitungsflüssigkeit erfolgende spanabhebende Werkstückbearbeitung ausgebildet ist, sowie mit mindestens einem die Bearbeitungseinheit einschließenden Bearbeitungsflüssigkeitskreislauf mit einer Aufbereitungsvorrichtung für bei der spanabhebenden Bearbeitung eingesetzte Bearbeitungsflüssigkeit, und mit mindestens einer in die Transferstraße integrierten Werkstückreinigungsvorrichtung, welche zur Reinigung der spanabhebend bearbeiteten Werkstücke mittels einer Flüssigkeit der Bearbeitungseinheit zugeordnet ist.

Wenn vorstehend und im folgenden von Bearbeitungseinheiten die Rede ist, muß es sich dabei nicht stets um solche Einheiten handeln, in denen die Werkstücke eine Gestaltänderung erfahren - unter einer Bearbeitungseinheit soll z. B. auch eine Einheit verstanden werden, in der ein Werkstück einer Wärmebehandlung, einer Messung oder einer Prüfung unterzogen wird oder ein Montagevorgang erfolgt.

Bei den Werkstücktransportmitteln kann es sich um alle bekannten Vorrichtungen handeln, welche dazu herangezogen werden können, Werkstücke durch die Transferstraße hindurchzutransportieren oder Werkstücke in einer Bearbeitungseinheit aufzunehmen und sie an die nächste Bearbeitungseinheit weiterzugeben.

Werden Werkstücke in einer Transferstraße einer spanabhebenden Bearbeitung unterzogen, worunter z. B. Drehen, Fräsen, Bohren, Sägen, Gewindeschneiden und Schleifen zu verstehen ist, werden die Werkstücke und/oder die Werkzeuge mit einer Bearbeitungsflüssigkeit beaufschlagt, welche der Kühlung der Werkstücke und/oder Werkzeuge und/oder der Erleichterung der spanabhebenden Bearbeitung dienen und üblicherweise als Kühl- und/oder Schneidflüssigkeiten bezeichnet werden. Bei diesen Kühl- und Schneidflüssigkeiten handelt es sich im allgemeinen um wässrige Emulsionen. Eine für eine spanabhebende Bearbeitung eingesetzte Bearbeitungseinheit, wie beispielsweise ein Bearbeitungszentrum, verfügt deshalb über einen Bearbeitungsflüssigkeitskreislauf, welcher mindestens eine Pumpe für die Bearbeitungsflüssigkeit und eine Aufbereitungsvorrichtung für gebrauchte Bearbeitungsflüssigkeit, z. B. ein einfaches Filter, besitzt und diejenige Stelle bzw. diejenigen Stellen beinhaltet, an denen die Werkstücke in der Bearbeitungseinheit spanabhebend bearbeitet werden.

Da nun von einer spanabhebenden Bearbeitung herrührende und an einem bearbeiteten Werkstück haften gebliebene Späne, Gratpartikel, aber auch Schleifkörner und dergleichen in einer nachfolgenden Bearbeitungseinheit der Transferstraße stören können - so stören Z. B. in einem zuvor gebohrten Sackloch verbliebene Späne bei einem nachfolgenden Gewindeschneidvorgang, Späne, Ansammlungen von Schleifkörnern und dergleichen können aber auch eine genaue Aufspannung eines Werkstücks in einer nachfolgenden Bearbeitungseinheit beeinträchtigen, ebenso wie derartige Bearbeitungsrückstände beim Zusammenmontieren mehrerer Teile sich nachteilig auswirken können -, ist schon ein Verfahren bzw. eine Transferstraße der eingangs erwähnten Art bekannt geworden (DE-195 14 478-A1). Diese bekannte Transferstraße umfaßt mehrere, durch Werkstücktransportmittel miteinander verkettete Werkzeugmaschinen, deren jeder eine Werkstück-Reinigungsvorrichtung zugeordnet ist, um die Werkstücke unmittelbar nach jeder spanabhebenden Bearbeitung zu reinigen. Während der spanabhebenden Bearbeitung werden die Werkstücke in der betreffenden Werkzeugmaschine mit einer Schneidflüssigkeit beaufschlagt, für die ein alle Werkzeugmaschinen der Transferstraße mit Schneidflüssigkeit versorgender Schneidflüssigkeitskreislauf vorgesehen ist, in dem die Schneidflüssigkeit aufbereitet wird und welcher einen zentralen Vorratsbehälter für die Schneidflüssigkeit aufweist. In den Werkstück-Reinigungsvorrichtungen werden die zuvor spanabhebend bearbeiteten Werkstücke mit einer Waschflüssigkeit gewaschen, für die ein allen Werkstück-Reinigungsvorrichtungen gemeinsamer Waschflüssigkeitskreislauf vorgesehen ist, welcher eine Aufbereitungsvorrichtung umfaßt, in der Späne und andere Bearbeitungsrückstände, aber auch von den bearbeiteten Werkstücken abgewaschene Schneidflüssigkeit von der Waschflüssigkeit abgetrennt werden; die von der Waschflüssigkeit abgetrennte Schneidflüssigkeit wird in den Schneidflüssigkeitsvorratsbehälter zurückgeleitet. Zweck der vorstehend beschriebenen Ausbildung dieser bekannten Transferstraße ist es, die den einzelnen Werkzeugmaschinen zugeordneten Werkstückreinigungsvorrichtungen einfach und kompakt ausbilden zu können, indem nicht jede einzelne Werkstückreinigungsvorrichtung mit einem der Aufbereitung der Waschflüssigkeit dienenden Waschflüssigkeitskreislauf versehen wird.

Der Erfindung lag die Aufgabe zugrunde, mit möglichst geringem Aufwand diejenigen Probleme zu minimieren, welche durch Bearbeitungsrückstände hervorgerufen werden können, die in der Transferstraße entstanden und an den Werkstücken haften geblieben sind.

Bei der Lösung dieser Aufgabe gingen die Erfinder von der Überlegung aus, daß mit den in Transferstraßen verwendeten Bearbeitungsflüssigkeiten in diesen Transferstraßen Flüssigkeiten zur Verfügung stehen, welche sich auch zur Werkstückreinigung einsetzen lassen und für die in den Transferstraßen ohnehin Aufbereitungsmittel, wie Filter, zur Verfügung stehen müssen, und daß es für eine Vermeidung der vorstehend aufgezeigten, durch Bearbeitungsrückstände hervorgerufenen Nachteile nicht erforderlich ist, aufwendige Reinigungsmaschinen einzusetzen, wie sie in der Industrie für die Endreinigung von Werkstücken, Baugruppen und dergleichen üblich sind - in solchen Reinigungsmaschinen wird das zu reinigende Gut mit organischen Lösemitteln oder mit wässrigen, waschaktive Substanzen enthaltenden Reinigungsflüssigkeiten sorgfältig gereinigt und in der Regel anschließend auch getrocknet, was geschlossene Reinigungs- und/oder Trocknungskammern sowie zur Vermeidung von Umweltbeeinträchtigungen einen äußerst sorgfältigen Umgang mit den eingesetzten Reinigungsflüssigkeiten erforderlich macht; hingegen sind die Arbeitsräume von Werkzeugmaschinen, in denen Werkstücke spanabhebend bearbeitet und dabei mit einer Bearbeitungsflüssigkeit beaufschlagt werden, niemals hermetisch dicht abgeschlossen, d. h. solche Bearbeitungsflüssigkeiten müssen notwendigerweise eine solche Zusammensetzung aufweisen, daß auch ihre Dämpfe nicht zu Umweltbeeinträchtigungen führen.

Zur Lösung der gestellten Aufgabe wird nun erfindungsgemäß vorgeschlagen, bei einem Verfahren der eingangs erwähnten Art die Werkstücke in der Transferstraße und nach der spanabhebenden Bearbeitung mit Bearbeitungsflüssigkeit zu reinigen.

Für eine Transferstraße der eingangs erwähnten Art sieht die Erfindung infolgedessen vor, daß zur Reinigung der spanabhebend bearbeiteten Werkstücke mittels Bearbeitungsflüssigkeit die Werkstückreinigungsvorrichtung an den Bearbeitungsflüssigkeitskreislauf angeschlossen ist.

Die Erfindung ermöglicht es also, die Reinigung mit einer Flüssigkeit durchzuführen, welche in der Transferstraße ohnehin zur Verfügung steht und für die in der Transferstraße auch Aufbereitungsmittel vorhanden sind - die im Zuge der Aufbereitung aus der gebrauchten Bearbeitungsflüssigkeit nach erfolgter Reinigung zu entfernenden Verunreinigungen sind ja genau von derselben Natur wie diejenigen Verunreinigungen, welche bei der zuvor erfolgten Werkstückbearbeitung in die Bearbeitungsflüssigkeit gelangt sind. Es ist also nur erforderlich, für die Werkstückreinigung aus dem mit der in Rede stehenden Bearbeitungseinheit zusammenhängenden Bearbeitungsflüssigkeitskreislauf aufbereitete Bearbeitungsflüssigkeit abzuziehen und mit dieser die Werkstückreinigung durchzuführen. Zur Vermeidung von Mißverständnissen sei aber darauf hingewiesen, daß es auch als im Rahmen der vorliegenden Erfindung liegend anzusehen ist, die in der Transferstraße ohnehin verwendete Bearbeitungsflüssigkeit für die Werkstückreinigung einzusetzen und sie dabei in einem gesonderten Kreislauf umzuwälzen sowie z. B. durch Filtern aufzubereiten.

Da es innerhalb einer Transferstraße, wie bereits erwähnt, nicht darauf ankommen kann, ein bearbeitetes Werkstücke absolut sauber und gegebenenfalls auch noch trocken an die nächste Bearbeitungseinheit weiterzugeben, können für das erfindungsgemäße Verfahren ganz einfache Reinigungsgeräte verwendet werden; so wäre es z. B. denkbar, bearbeitete und zu reinigende Werkstücke mittels einer üblichen Förder- oder Werkstück-Handhabungsvorrichtung an einer Stelle vorbeizuführen, an der die Werkstücke einfach mit Bearbeitungsflüssigkeit abgespritzt werden; denkbar ist aber auch, vor allem bei Einsatz eines Hängeförderers, die zu reinigenden Werkstücke durch ein von der Bearbeitungsflüssigkeit gebildetes Tauchbad hindurchzubewegen. Auch kann eine Spritzdüse oder eine Mehrzahl von Spritzdüsen mittels eines einfachen Handhabungsgerätes bezüglich eines zu reinigenden Werkstücks so bewegt werden, daß dieses von allen Seiten und aus allen Richtungen abgespritzt wird, wobei sich Verluste an für die Reinigung eingesetzter Reinigungsflüssigkeit verhältnismäßig einfach vermeiden lassen, indem man die zu reinigenden Werkstücke mittels einer Fördervorrichtung durch eine Art Tunnel hindurchführt, in dem die Reinigung erfolgt und die verspritzte Bearbeitungsflüssigkeit in einer Wanne wieder aufgefangen und der Aufbereitung zugeführt wird; alternativ kann ein bearbeitetes Werkstück mittels eines Werkstück-Handhabungsgeräts in eine Reinigungskammer eingebracht, diese geschlossen und dann das Werkstück gereinigt werden.

Wie bereits erwähnt, könnte die für die Reinigung verwendete Bearbeitungsflüssigkeit separat aufbereitet werden; da aber eine spanabhebend arbeitende Bearbeitungseinheit einer Transferstraße ohnehin mit einer Aufbereitungsvorrichtung für die Bearbeitungsflüssigkeit versehen ist, läßt sich das erfindungsgemäße Verfahren vereinfachen, indem die für die Reinigung verwendete Bearbeitungsflüssigkeit zusammen mit bei der spanabhebenden Bearbeitung verwendeter Bearbeitungsflüssigkeit aufbereitet wird.

Grundsätzlich könnte das erfindungsgemäße Verfahren so abgewandelt werden, daß unter Heranziehung von in der Transferstraße ohnehin verwendeter Bearbeitungsflüssigkeit die Werkstücke nur unmittelbar vor dem Verlassen der Transferstraße gereinigt werden, um so eine spätere Endreinigung einfacher und in kürzerer Zeit durchführen zu können. Bevorzugt findet das erfindungsgemäße Verfahren jedoch in solchen Fällen Anwendung, in denen spanabhebend bearbeitete Werkstücke auf alle Fälle gereinigt werden, ehe sie in die nächste Behandlungseinheit der Transferstraße gelangen.

Umfaßt die Transferstraße mehrere für eine spanabhebende Bearbeitung ausgebildete Bearbeitungseinheiten, ist es empfehlenswert, jeder dieser Bearbeitungseinheiten eine Werkstückreinigungsvorrichtung unmittelbar nachzuordnen; andererseits sind Fälle denkbar, in denen ein noch geringerer apparativer Aufwand ausreicht, nämlich z. B. dann, wenn in einer auf eine spanabhebende Bearbeitung folgenden Behandlungseinheit an den Werkstücken haftende Späne und dergleichen nicht stören.

Bei einer bevorzugten Ausführungsform einer erfindungsgemäßen Transferstraße hat die erfindungsgemäß vorgesehene Reinigungsvorrichtung einen Zulauf für die zur Reinigung zu verwendende Bearbeitungsflüssigkeit sowie einen Auslaß für die bei der Reinigung eingesetzte Bearbeitungsflüssigkeit, wobei der Zulauf mit einer ersten Stelle des Bearbeitungsflüssigkeitskreislaufs der vorausgehenden Bearbeitungseinheit verbunden ist, welche stromabwärts der Aufbereitungsvorrichtung sowie stromaufwärts einer Bearbeitungsstation für die spanabhebende Werkstückbearbeitung liegt, und wobei der Auslaß mit einer zweiten Stelle des Bearbeitungsflüssigkeitskreislaufs verbunden ist, welche stromabwärts der Bearbeitungsstation sowie stromaufwärts der Aufbereitungsvorrichtung liegt. Da der Bearbeitungsflüssigkeitskreislauf ohnehin über eine Umwälzpumpe verfügen muß, wäre es sogar denkbar, diese auch dazu heranzuziehen, die Reinigungsvorrichtung mit unter einem für den Reinigungsvorgang hinreichenden Druck stehender Bearbeitungsflüssigkeit zu beschicken, so daß die Reinigungsvorrichtung gar nicht über eine eigene Förderpumpe verfügen muß. Bei entsprechender Plazierung der Umwälzpumpe im Bearbeitungsflüssigkeitskreislauf könnte es diese Pumpe dann auch bewerkstelligen, daß sowohl die von der spanabhebenden Bearbeitung, als auch die von der Reinigung kommende Bearbeitungsflüssigkeit durch die Aufbereitungsvorrichtung des Bearbeitungsflüssigkeitskreislaufs hindurchgesaugt wird.

Nachdem Transferstraßen, die unterschiedlichsten, in solchen Transferstraßen einsetzbaren Behandlungseinheiten und Werkstück-Transportmittel sowie Bearbeitungsflüssigkeitskreisläufe für spanabhebend arbeitende Bearbeitungseinheiten ebenso bekannt sind wie eine Vielzahl von einfachen und für die Durchführung der vorliegenden Erfindung geeigneten Reinigungsvorrichtungen, ist es nicht erforderlich, eine erfindungsgemäß ausgebildete Transferstraße im einzelnen zeichnerisch darzustellen und zu beschreiben; deshalb sollen anhand der beiliegenden Prinzipzeichnungen nur Möglichkeiten der Ausgestaltung der vorliegenden Erfindung kurz beschrieben werden.

In der beiliegenden Zeichnung zeigen:

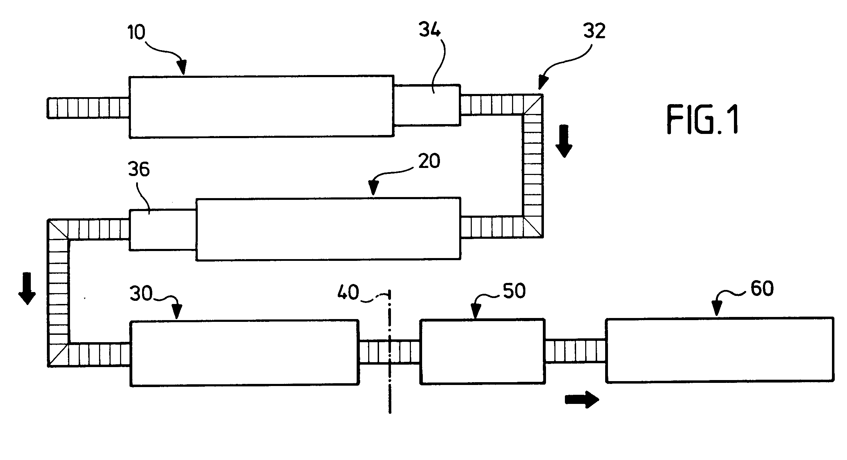

- Fig. 1: eine Prinzipzeichnung einer erfindungsgemäßen Transferstraße, und zwar in der Draufsicht, sowie zwei sich an die Transferstraße anschließende Einheiten, und

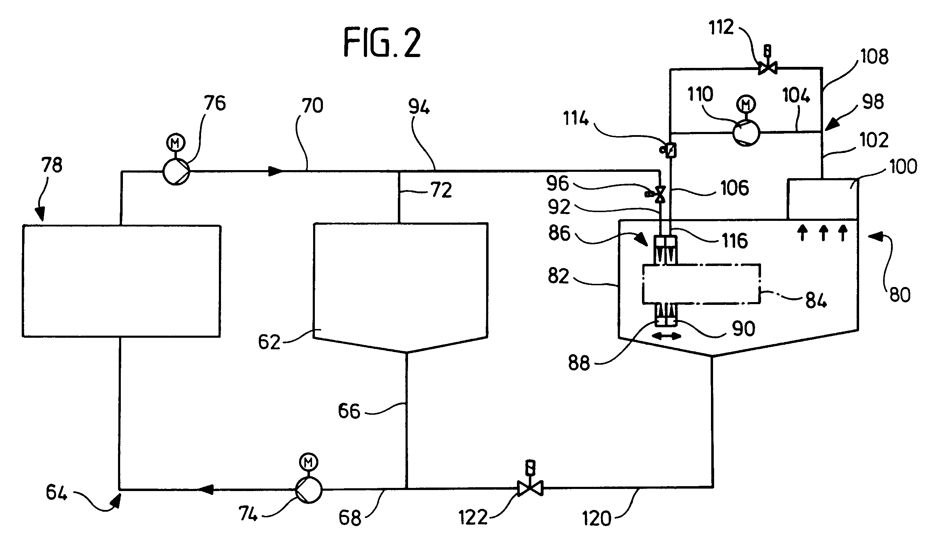

- Fig. 2: eine schematische Darstellung einer als Bearbeitungseinheit ausgebildeten Behandlungseinheit einer erfindungsgemäßen Transferstraße samt Kreislauf für die bei der spanabhebenden Werkstückbearbeitung eingesetzte Bearbeitungsflüssigkeit, sowie einer dieser Bearbeitungseinheit zugeordneten Werkstückreinigungsvorrichtung, welche an den Bearbeitungsflüssigkeitskreislauf angeschlossen und mit Mitteln für ein mindestens teilweises Trocknen der gereinigten Werkstücke versehen ist.

Die in Fig. 1 schematisch dargestellte Transferstraße umfaßt eine erste Behandlungseinheit 10, in der Werkstücke, z. B. Zylinderköpfe von Verbrennungsmotoren, spanabhebend bearbeitet werden, und zwar unter Einsatz einer Bearbeitungsflüssigkeit wie einer Kühlflüssigkeit. Des weiteren umfaßt die Transferstraße eine zweite Behandlungseinheit 20, in der weitere spanabhebende Bearbeitungen der Werkstücke erfolgen sollen. Schließlich besitzt die Transferstraße eine dritte Behandlungseinheit 30, bei der es sich beispielsweise um eine Montageeinheit handeln soll, in der z. B. Ventilsitze in den zuvor fertig bearbeiteten Zylinderköpfen angebracht werden. Die verschiedenen Behandlungseinheiten der Transferstraße werden durch eine Werkstück-Fördereinrichtung 32 miteinander verkettet, welche dazu dient, die Werkstücke nacheinander durch die Transferstraße hindurchzubewegen, und zwar in Richtung der in die Zeichnung eingezeichneten Pfeile. Hinter der Behandlungseinheit 30 endet die eigentliche Transferstraße.

An die in bekannter Weise ausgebildeten Behandlungseinheiten 10 und 20 ist jeweils eine erfindungsgemäße Reinigungsvorrichtung 34 bzw. 36 angebaut, und zwar an das auslaßseitige Ende der betreffenden Behandlungseinheit. Die Fördermittel der Fördereinrichtung 32 durchlaufen also nicht nur die Behandlungseinheiten 10, 20 und 30, sondern auch die Reinigungsvorrichtungen 34 und 36. Die Reinigungsvorrichtung 34 ist in der beschriebenen Weise an den Bearbeitungsflüssigkeitskreislauf der Behandlungseinheit 10 angeschlossen, die Reinigungsvorrichtung 36 an den Bearbeitungsflüssigkeitskreislauf der Behandlungseinheit 20. Die in der Behandlungseinheit 10 spanabhebend bearbeiteten Werkstücke gelangen also zumindest grob gereinigt in die Behandlungseinheit 20, wo sie weiterbearbeitet, dann in der Reinigungsvorrichtung 36 zumindest grob gereinigt und schließlich an die Behandlungseinheit 30 weitergegeben werden.

Die Fördereinrichtung 32 setzt sich über das durch die strichpunktierte Linie 40 angedeutete auslaßseitige Ende der Transferstraße hinaus fort und übergibt die fertig bearbeiteten Werkstücke an eine bekannte Endreinigungsanlage 50, von wo aus die gereinigten und getrockneten Werkstücke mit Hilfe der Fördereinrichtung 32 zu einer Montagelinie 60 gebracht werden.

Die Fig. 2 zeigt eine Bearbeitungseinheit 62 einer Transferstraße, welche in ihrem Aufbau gegenüber der in Fig. 1 schematisch dargestellten Transferstraße modifiziert sein kann; die Bearbeitungseinheit 62 kann aber auch einer der Behandlungseinheiten 10 und 20 der in Fig. 1 dargestellten Transferstraße entsprechen. Bei der Bearbeitungseinheit 62 soll es sich um irgendeine bekannte Werkzeugmaschine oder um ein bekanntes Bearbeitungszentrum handeln, weshalb der Bearbeitungseinheit 62 ein bekannter Bearbeitungsflüssigkeitskreislauf 64 zugeordnet ist. Der eigentliche Kreislauf wird von Leitungen 66, 68, 70 und 72 gebildet und beinhaltet außer der Bearbeitungseinheit 62 zwei Pumpen 74 und 76 zum Umwälzen der Bearbeitungsflüssigkeit sowie eine Aufbereitungsvorrichtung 78, in der im Zuge einer in der Bearbeitungseinheit 62 erfolgenden Werkstückbearbeitung in die Bearbeitungsflüssigkeit gelangte Verunreinigungen, wie Späne, Schleifkörner und dergleichen, von der Bearbeitungsflüssigkeit abgetrennt werden, ehe die letztere in der Bearbeitungseinheit 62 wieder zum Einsatz kommt. Bei der Aufbereitungsvorrichtung 78 kann es sich also in bekannter Weise beispielsweise um ein Filter oder einen Zyklon-Abscheider handeln. Durch die Pumpe 74 wird die gebrauchte Bearbeitungsflüssigkeit aus der Bearbeitungseinheit 62, z. B. aus einer im unteren Bereich des Arbeitsraums der Werkzeugmaschine angeordneten Auffangwanne, abgezogen und mit dem für die Aufbereitung erforderlichen Druck in die Aufbereitungsvorrichtung 78 eingespeist, während die Pumpe 76 die gereinigte Bearbeitungsflüssigkeit mit erheblichem Druck unter anderem in die Leitung 72 fördert, über die im Arbeitsraum der Werkzeugmaschine angeordnete Spritzdüsen mit Bearbeitungsflüssigkeit versorgt werden, um die letztere auf diejenigen Stellen des Werkstücks aufzubringen, welche gerade bearbeitet werden.

Die Fig. 2 zeigt ferner eine erfindungsgemäße und als Ganzes mit 80 bezeichnete Werkstück-Reinigungsvorrichtung, welche wie folgt aufgebaut ist:

Zur Aufnahme der zu reinigenden Werkstücke ist eine Reinigungskammer 82 vorgesehen, in die sich bei der dargestellten Ausführungsform jeweils ein zuvor bearbeitetes Werkstück 84 einbringen läßt; bei dem letzteren kann es sich beispielsweise um einen Zylinderkopf eines Verbrennungsmotors handeln. Halterungen zum Halten des zu reinigenden Werkstücks 84 in der Kammer 82 wurden nicht dargestellt, da diese dem Fachmann von Reinigungskammern herkömmlicher Reinigungsmaschinen bekannt sind. Die Reinigungskammer 82 kann beispielsweise oben eine verschließbare Öffnung zum Einbringen der zu reinigenden Werkstücke von oben in die Reinigungskammer und zum Entfernen der gereinigten Werkstücke nach oben aus der Kammer aufweisen. Geräte, welche für eine solche Werkstückhandhabung geeignet sind, bedürfen keiner zeichnerischen Darstellung und Beschreibung, da der Fachmann mit solchen Geräten wohlvertraut ist; bekannte derartige Werkstück-Handhabungsgeräte besitzen einen Greifer, mit dem sich ein zu reinigendes Werkstück entweder aus dem Arbeitsraum einer Werkzeugmaschine entnehmen oder von einem Förderer, wie dem in Fig. 1 schematisch dargestellten Förderer 32, abheben läßt, um es anschließend von oben in die Reinigungskammer 82 einzubringen, worauf der Werkstückgreifer des Handhabungsgeräts aus der Kammer 82 entfernt und diese geschlossen wird. Nach erfolgter Werkstückreinigung kann das Werkstück mit demselben Handhabungsgerät aus der Reinigungskammer 82 herausgehoben und auf dem Förderer 32 abgelegt oder in die nächste Behandlungseinheit eingebracht werden.

In der Reinigungskammer 82 ist eine Düseneinheit 86 angeordnet, welche das zu reinigende Werkstück 84 wie ein Ring umfaßt und durch einen nicht dargestellten Antrieb in Richtung des in die Fig. 2 eingezeichneten Doppelpfeils so hin- und hergefahren werden kann, daß zumindest in der einen Endstellung der Düseneinheit 86 ein zu reinigendes Werkstück in die Kammer 82 eingebracht bzw. ein gereinigtes Werkstück aus der Kammer herausgehoben werden kann. Bestandteile der Düseneinheit 86 sind ein ringförmiges Spritzrohr 88 und ein gleichfalls ringförmiges Blasrohr 90; das Spritzrohr 88 ist mit nicht näher dargestellten Spritzdüsen versehen, deren jede einen Hochdruck-Spritzstrahl erzeugen kann, welcher auf das Werkstück gerichtet ist. Damit Bearbeitungsflüssigkeit dem Spritzrohr 88 zugeführt werden kann, ist an letzteres ein flexibler Schlauch 92 angeschlossen, der es erlaubt, die Düseneinheit 86 hin- und herzufahren und über den das Spritzrohr 88 in Verbindung steht mit einer Leitung 94, in der sich ein Ventil 96 befindet und die an die Leitung 70 des Bearbeitungsflüssigkeitskreislaufs 64 angeschlossen ist und so mit der Druckseite der Pumpe 76 in Verbindung steht. Natürlich endet die Leitung 94 nicht, wie in der schematischen Darstellung der Fig. 2 gezeichnet, an einer Stelle der Wandung der Reinigungskammer 82, in deren Bereich sich die Be- und Entladeöffnung dieser Kammer befindet, sondern beispielsweise in einer der Seitenwände der Reinigungskammer, von der dann auch der flexible Schlauch 92 wegführt.

Zur Werkstück-Reinigungsvorrichtung 80 gehört auch ein Blasluft-Kreislauf 98, welcher das Blasrohr 90 beinhaltet. Letzteres hat mehrere Blasdüsen, welche auf das Werkstück 84 gerichtet sind, um nach erfolgter Reinigung des letzteren mit Bearbeitungsflüssigkeit am Werkstück verbliebene Flüssigkeitsreste vom Werkstück zu entfernen. Zum Blasluft-Kreislauf 98 gehören außer dem Blasrohr 90 ein Filter 100, Leitungen 102, 104, 106 und 108, ein als Pumpe dienender Luftverdichter 110 sowie zwei Ventile 112 und 114 und schließlich ein flexibler Schlauch 116, über den die stationäre Leitung 106 mit dem hin- und herfahrenden Blasrohr 90 verbunden ist analog der Verbindung des Spritzrohrs 88 über den flexiblen Schlauch 92 mit der Leitung 94.

Vom tiefsten Punkt der Reinigungskammer 82 führt schließlich eine Leitung 120 zum Bearbeitungsflüssigkeitskreislauf 64, und die Leitung 120 enthält ein Ventil 122, welches ebenso wie die anderen Ventile der Anlage über eine Anlagensteuerung programmgemäß geöffnet und geschlossen werden kann.

Die Funktion des in Fig. 2 dargestellten Anlagenteils ist nun die folgende:

Nachdem ein zuvor bearbeitetes und zu reinigendes Werkstück 84 in die Reinigungskammer 82 eingebracht und die letztere wieder geschlossen wurde, werden die Ventile 96 und 122 geöffnet und es wird der Antrieb für die Düseneinheit 86 eingeschaltet, um diese längs des Werkstücks hin- und herzubewegen. Dabei wird von der Pumpe 76 über die Leitungen 70 und 94 sowie den flexiblen Schlauch 92 unter verhältnismäßig hohem Druck stehende Bearbeitungsflüssigkeit in das Spritzrohr 88 gefördert und so das Werkstück gereinigt. Die sich am Boden der Reinigungskammer 82 sammelnde Bearbeitungsflüssigkeit wird durch die Pumpe 74 über die Leitung 120 aus der Kammer 82 abgezogen und in der Aufbereitungsvorrichtung 78 gereinigt.

Nach erfolgter Reinigung des Werkstücks 84 werden die Ventile 96 und 122 geschlossen, worauf das Ventil 114 geöffnet wird. Der Antrieb für die Düseneinheit 86 bleibt eingeschaltet, so daß nun am gereinigten Werkstück verbliebene Bearbeitungsflüssigkeit vom Werkstück abgeblasen wird. Dabei wird die Blasluft im Kreislauf geführt: Der Luftverdichter 110 saugt die Blasluft wieder aus der Reinigungskammer 82 ab, nämlich durch nicht dargestellte Öffnungen in der Wandung der Reinigungskammer 82 hindurch und durch das Filter 100, welches in für den Fachmann bekannter Weise so ausgebildet ist, daß es feste Verunreinigungen ebenso wie Flüssigkeitströpfchen abscheiden kann.

Während so am Werkstück haften gebliebene Bearbeitungsflüssigkeit abgeblasen und das Werkstück gegebenenfalls auch getrocknet wird, ist das Ventil 112 geschlossen. Während die Reinigungskammer 82 offen ist, um ein zu reinigendes Werkstück in die Kammer einzubringen oder ein gereinigtes Werkstück der Kammer zu entnehmen, sowie während des Abspritzens des Werkstücks mit Bearbeitungsflüssigkeit ist das Ventil 114 geschlossen, hingegen das Ventil 112 offen, um so den Luftverdichter 110 nicht immer an- und abschalten zu müssen, sondern ihn vielmehr im Dauerbetrieb laufen lassen zu können, auch wenn das Blasrohr 90 nicht in Aktion ist - so lange wird die vom Luftverdichter 110 geförderte Luft in einem separaten Kreislauf umgepumpt, nämlich in den Leitungen 104 und 108.

Bei hinreichender Förderleistung der Pumpe 76 kann natürlich ein Werkstück in der Reinigungskammer 82 gereinigt werden, während das nächste Werkstück in der Bearbeitungseinheit 62 bearbeitet wird, da die zur Werkstückreinigung eingesetzte Bearbeitungsflüssigkeit in der Aufbereitungsvorrichtung 78 zusammen mit derjenigen Bearbeitungsflüssigkeit gereinigt werden kann, welche zuvor in der Bearbeitungseinheit 62 Verwendung gefunden hat.

## Patentansprüche

1. Verfahren zur Behandlung von Werkstücken in einer mehrere miteinander durch Werkstücktransportmittel verkettete Behandlungseinheiten umfassenden Transferstraße, bei dem die Werkstücke mindestens in einer vor der letzten Behandlungseinheit der Transferstraße befindlichen, eine Bearbeitungseinheit bildenden Behandlungseinheit einer spanabhebenden Bearbeitung unterzogen und dabei mit einer Bearbeitungsflüssigkeit beaufschlagt werden, welche im Kreislauf geführt und dabei aufbereitet wird, und bei dem die Werkstücke in der Transferstraße und nach der spanabhebenden Bearbeitung mit einer Flüssigkeit gereinigt werden, **dadurch gekennzeichnet,** daß die Werkstücke mit der Bearbeitungsflüssigkeit gereinigt werden.

2. Verfahren nach Anspruch 1, dadurch gekennzeichnet, daß die für die Reinigung verwendete Bearbeitungsflüssigkeit zusammen mit bei der spanabhebenden Bearbeitung verwendeter Bearbeitungsflüssigkeit aufbereitet wird.

3. Verfahren nach Anspruch 1 oder 2, dadurch gekennzeichnet, daß die Werkstücke zum Reinigen mit Bearbeitungsflüssigkeit abgespritzt werden.

4. Verfahren nach einem oder mehreren der vorstehenden Ansprüche, dadurch gekennzeichnet, daß die Werkstückreinigung erfolgt, ehe die Werkstücke in die letzte Behandlungseinheit gelangen.

5. Verfahren nach Anspruch 4, dadurch gekennzeichnet, daß die Werkstückreinigung erfolgt, ehe die Werkstücke in diejenige Behandlungseinheit gelangen, welche der der spanabhebenden Bearbeitung dienenden Bearbeitungseinheit unmittelbar nachgeordnet ist.

6. Verfahren nach einem oder mehreren der Ansprüche 1 bis 5, dadurch gekennzeichnet, daß die Werkstücke nach der Reinigung mit Blasluftstrahlen beaufschlagt und so mindestens im wesentlichen von anhaftender Bearbeitungsflüssigkeit befreit sowie gegebenenfalls getrocknet werden.

7. Transferstraße mit mehreren Behandlungseinheiten, welche durch Werkstücktransportmittel miteinander verkettet sind und von denen mindestens eine vor der letzten Behandlungseinheit der Transferstraße befindliche, eine Bearbeitungseinheit bildende Behandlungseinheit für eine unter Einsatz einer Bearbeitungsflüssigkeit erfolgende spanabhebende Werkstückbearbeitung ausgebildet ist, sowie mit mindestens einem die Bearbeitungseinheit einschließenden Bearbeitungsflüssigkeitskreislauf mit einer Aufbereitungsvorrichtung für bei der spanabhebenden Bearbeitung eingesetzte Bearbeitungsflüssigkeit, und mit mindestens einer in die Transferstraße integrierten Werkstückreinigungsvorrichtung, welche zur Reinigung der spanabhebend bearbeiteten Werkstücke mittels einer Flüssigkeit der Bearbeitungseinheit zugeordnet ist, **dadurch gekennzeichnet,** daß zur Reinigung der spanabhebend bearbeiteten Werkstücke mittels Bearbeitungsflüssigkeit die Werkstückreinigungsvorrichtung an den Bearbeitungsflüssigkeitskreislauf angeschlossen ist.

8. Transferstraße nach Anspruch 7, dadurch gekennzeichnet, daß die Werkstückreinigungsvorrichtung zwischen der für die spanabhebende Bearbeitung ausgebildeten Behandlungseinheit und der der letzteren unmittelbar nachfolgenden Behandlungseinheit angeordnet ist.

9. Transferstraße nach Anspruch 7 oder 8, dadurch gekennzeichnet, daß jeder für eine spanabhebende Bearbeitung ausgebildeten Behandlungseinheit eine Werkstückreinigungsvorrichtung unmittelbar nachgeordnet ist.

10. Transferstraße nach einem oder mehreren der Ansprüche 7 bis 9, dadurch gekennzeichnet, daß die Reinigungsvorrichtung als Spritzreinigungsvorrichtung ausgebildet ist.

11. Transferstraße nach einem oder mehreren der Ansprüche 7 bis 10, dadurch gekennzeichnet, daß die Reinigungsvorrichtung Auffangmittel für die bei der Reinigung eingesetzte Bearbeitungsflüssigkeit aufweist.

12. Transferstraße nach einem oder mehreren der Ansprüche 7 bis 11, dadurch gekennzeichnet, daß die Reinigungsvorrichtung einen Zulauf für die zur Reinigung zu verwendende Bearbeitungsflüssigkeit und einen Auslaß für die bei der Reinigung eingesetzte Bearbeitungsflüssigkeit aufweist, wobei der Zulauf mit einer ersten Stelle des Bearbeitungsflüssigkeitskreislaufs verbunden ist, welche stromabwärts der Aufbereitungsvorrichtung sowie stromaufwärts einer Bearbeitungsstation für die spanabhebende Werkstückbearbeitung liegt, und daß der Auslaß mit einer zweiten Stelle des Bearbeitungsflüssigkeitskreislaufs verbunden ist, welche stromabwärts der Bearbeitungsstation sowie stromaufwärts der Aufbereitungsvorrichtung liegt.

13. Transferstraße nach einem oder mehreren der Ansprüche 7 bis 12, dadurch gekennzeichnet, daß die Werkstückreinigungsvorrichtung mehrere Blasluftdüsen aufweist und daß die letzteren und die zu reinigenden Werkstücke relativ zueinander bewegbar sind.
